# EUROPEAN PATENT SPECIFICATION

(11) **EP 1 359 496 B1**
(45) Date of publication and mention of the grant of the patent: **19.07.2017**
(21) Application number: 02711380.2
(22) Date of filing: 07.02.2002
(51) Int. Cl.: G06F 3/0354, G06F 3/02, G06K 9/00, G06F 3/033

(54) **INPUT DEVICE**
EINGABEEINRICHTUNG
ORGANE D'ENTRE

(30) Priority: 09.02.2001 JP 2001034597; 17.07.2001 JP 2001217365
(43) Date of publication of application: 05.11.2003
(73) Proprietor: Sony Corporation, Tokyo 141-0001 (JP)
(72) Inventor: FUJITA, Yasushi c/o SONY CORPORATION, Tokyo 141-0001 (JP); MATSUMOTO, Shigeo c/o SONY CORPORATION, Tokyo 141-0001 (JP); ENDO, Katsumi c/o SONY CORPORATION, Tokyo 141-0001 (JP); KADONAGA, Akira c/o SONY CORPORATION, Tokyo 141-0001 (JP)
(74) Representative: D Young & Co LLP
(86) International application number: PCT/JP2002/001037
(87) International publication number: WO 2002/065268

(56) References cited:
- EP-A- 1 006 479
- WO-A-98/38567
- JP-A- 1 065 676
- JP-A- 8 213 768
- JP-A- 10 116 486
- JP-A- 10 143 270
- JP-A- 2000 076 008
- JP-A- 2000 182 025
- JP-A- 2000 194 830
- JP-A- 2000 353 235
- JP-U- 4 004 352
- US-A- 5 341 421

## Description

### Technical Field

The present disclosure relates to an input device which can input operation signals to Host equipment.

### Background Art

Electronic Data Interchanges (Commercial Dealings) carried out through network such as Internet, etc. are carried out by information processing apparatus such as personal computer, mobile telephone or PDA (Personal Digital Assistance), etc. In the Electronic Data Interchanges, in order to realize safety of dealings, there are instances where fingerprint which is one of bio-identification information is collated with fingerprint registered in advance to thereby carry out certification with respect to opponent of dealings. This fingerprint collation is carried out by ordinarily connecting fingerprint collating device to information processing apparatus.

Moreover, mouse for specifying operation position on picture, keyboard for inputting characters and/or symbols, etc., and drive unit for loading external memory device such as memory card, etc. are connected to the information processing apparatus as peripheral equipment.

However, since only several connecting portions for connecting peripheral equipment are ordinarily provided at the information processing apparatus, there are instances where fingerprint collating unit cannot be newly connected. Further, in order to connect fingerprint collating device, it is troublesome to carry out connection/exchange with respect to peripheral equipment already connected to information processing apparatus. In addition, the peripheral equipment which has been detached from the information processing apparatus would not be used for that time.

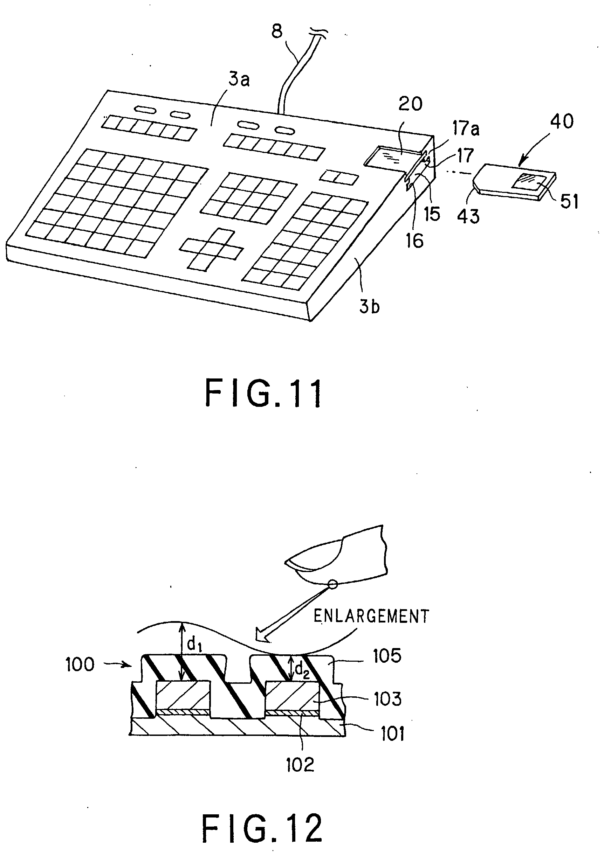

Meanwhile, in general, as a fingerprint detection method for realizing fingerprint collation function, there are an optical detection method of picking up image of finger head by using image pick-up device, and an electrostatic capacity detection method of forming capacitor to detect difference of capacitance changing in accordance with fingerprint. Further, in order to carry out connection to information processing apparatus as a peripheral equipment, the electrostatic capacity type is advantageous for the purpose of suppressing enlargement of equipment. In this fingerprint detection method of the electrostatic capacity type, as shown in FIG. 12, a barrier metal 102 consisting of Ti, etc. is formed on a substrate 101 where there are formed elements such as transistor, etc. which constitute a fingerprint sensor 100. At the upper layer of the barrier metal 102, metallic wiring (A1 wiring) 103 is formed. At the uppermost layer of this substrate 101, passivation film 105 consisting of silicon nitride film or silicon oxide film is formed.

At the fingerprint sensor 100, as the result of the fact that finger is touched from onto the passivation film 105, capacitor is formed between the Al wiring 103 and finger. Distance d between each Al wiring 103 and finger changes in accordance with uneven state of finger by fingerprint. Accordingly, at respective capacitors constituting the fingerprint sensor 100, differences take place in capacitance in accordance with fingerprints to detect such differences to thereby carry out recognition of fingerprint.

However, when static electricity is charged at finger of user, the fingerprint sensor 100 cannot precisely detect differences in capacitance of respective capacitors produced by presence or absence of fingerprint, thus failing to precisely detect fingerprint.

Further, also as the result of the fact that dust, etc. is stacked on the passivation film 105 of the fingerprint sensor 100, it is impossible to precisely detect differences in capacitance of respective capacitors, thus failing to precisely detect fingerprint.

In addition, also in the fingerprint detection method by the optical detection method, when dust, etc. is attached to the image pick-up unit such as CCD or line sensor, etc., it is impossible to precisely pick up image of upheaval (rising) line of fingerprint, thus failing to precisely detect fingerprint.

US-A-5,341421 describes a pointing peripheral device enabling connection of a memory and/or microcomputer module 12, 25, 44.

JP-A-10 143270 describes a mouse with an inserting port 23 for IC card and a finger-print sensor 25, said sensor being mounted in an opening such that it is exposed to the outward and therefore accessible for the finger of the user said sensor.

WO-A-98/38567 discloses fingerprint sensor on a PCMCIA card (Fig. 5), opposite to a PCMCIA connector and the fingerprint sensor positioned anywhere such that a fingertip rests upon it comfortably while the card is installed within a host computer; WO-A-98/38567 also discloses a mouse housed within a same housing as a fingerprint sensor (Fig. 8).

EP-A-1 006 479 teaches a PCMCIA card with a fingerprint sensor mounted on a telescopic slide; or fixedly mounted in the PCMCIA card, with a cutout to access the sensor; the card may further include chip card reader: cf. insertion channel; also disclosed is a chip card with fingerprint sensor thereon, linger than channel for accessibility.

JP-A-01 065676 describes a sliding protection cover over a fingerprint sensor; said cover is spring biased..

A fingerprint detector is described in JP-A-2000 194830 which is provided with a sensor for detecting individual identification information disposed to a mouse for operating an input tool on a display screen such as a pointer. An electrode is disposed at the position of the mouse to be easily touched with the hand of a user holding the mouse and a means is provided for supplying ground potential to the electrode. Static electricity charged in the user and the static electricity generated by the operation of the mouse are released by the grounded electrode and the individual identification information of a high S/N is detected.

A fingerprint collating device is described in JP-A-2000 182025 which is formed of an IC card. In addition, a capacitance type fingerprint reading sensor is provided on a surface facing the side of the user of the IC card, which is used by insert-connecting an externally connecting terminal to a card slot of a computer. After insert-connecting the card to the card slot, the sensor is touched with a finger for inputting.

A fingerprint recognizing device is described in JP-A-2000 353235 which is provided with semiconductor fingerprint sensor elements, and a finger is butted to the surface of the semiconductor fingerprint sensor element so that the fingerprint can be read. In this fingerprint recognizing device, a cover which is constituted of a metallic plate arranged at the surface side so as to be connected with a ground level and an insulating plate arranged at the back side to be faced to the surface of the semiconductor fingerprint sensor element is formed on the surface of the semiconductor fingerprint sensor element.

A sliding-door type opening-closing mechanism is described in JP-A-08 213768.

A shutter opening-closing mechanism is described in JP-A-10 116486.

An information processor is described in JP-A-2000 076008 which is composed of a main body and a mouse pad connected through a cable to the main body. In the mouse, a transmission means transmits the information received from a user by an information detecting means composed of buttons B1 and B2 or the like through the antenna and in the mouse pad, a reception means receives the information through the antenna. The information of an identifier stored in an external module freely attachable to and detachable from the mouse is transmitted from the mouse to the information processor and the module is verified as well.

### Disclosure of the Invention

Various aspects and features of the present invention are defined in the claims.

In view of the above, embodiments of the present disclosure seek to provide an input device adapted so that IC card having fingerprint detection/collation function is permitted to be loaded with respect to the device casing to thereby have ability to easily add fingerprint detection/collation function also to information processing apparatus having less number of connecting portions of the peripheral equipment.

Moreover, embodiments of the present disclosure seek to permit IC card having fingerprint detection/collation function to be loaded with respect to mouse or keyboard, etc. that user of information processing apparatus frequently attaches hand, thereby making it possible to easily carry out fingerprint detection/collation work.

Further, embodiments of the present disclosure seek to provide an input device having fingerprint detection/collation function to remove electric charge charged at finger of user at the time of detection of fingerprint to thereby have ability to precisely detect fingerprint.

In addition, embodiments of the present disclosure seek to provide an input device having fingerprint detection/collation function to prevent that dust, etc., is stacked at the time of non-use to thereby permit a sensor unit which detects fingerprint to be kept clean.

In order to attain the above, an input device according to an embodiment of the present disclosure includes a device casing provided with an operation unit for carrying out operation of a host equipment and connected to the host equipment, a fingerprint detecting portion provided at the operation surface side of the device casing and serving to detect fingerprint of user, and an opening portion for facing the fingerprint detecting portion to toward the external.

In the input device according to an embodiment of the present disclosure constituted as described above, even in the case of host equipment having less number of connecting portions, IC card having fingerprint detection/collation function is loaded with respect to the loading portion of the input device, thereby making it possible to easily add fingerprint detection/collation function to host equipment. Further, since this input device is a device that user handles at the highest frequency at the time of use of the host equipment, it is possible to easily carry out a work for pressing finger head onto the fingerprint detecting portion.

Further, in the input device according to an embodiment of the present disclosure, since fingerprint detecting portion for detecting fingerprint of user, and shutter portion provided at opening portion for facing this fingerprint detecting portion toward the external are provided, the fingerprint detecting portion can be closed by the shutter portion when fingerprint detection is not carried out. Accordingly, it is possible to prevent that dust, etc. is admitted so that the fingerprint detecting portion is stained.

In addition, in accordance with the input device according to an embodiment of the present disclosure, since metallic shutter portion is provided, it is possible to remove static electricity charged at finger of user before detection of fingerprint. Accordingly, the fingerprint detecting portion can precisely detect fingerprint of user.

### Brief Description of the Drawings

FIG. 1 is a view for explaining information processing apparatus to which mouse to which the present disclosure is applied is connected.
FIG. 2 is a perspective view showing the state where IC card is loaded with respect to the mouse.
FIG. 3 is a perspective view showing the state where IC card has been loaded with respect to the mouse.
FIG. 4 is a perspective view showing the state where opening portion is closed by shutter member of the mouse.
FIG. 5 is a perspective view showing the state where the opening portion is opened by shutter member of the mouse.
FIG. 6 is ablockdiagram for explaining circuit configuration of the information processing apparatus and the mouse.
FIG. 7 is a block diagram for explaining circuit configuration of IC card having fingerprint collation function.
FIG. 8 is a model view showing opening/closing operation of another shutter member.
FIG. 9 is a model view showing opening/closing operation of another shutter member.
FIG.10 is a perspective view showing another input device to which the present disclosure is applied.
FIG. 11 is a perspective view showing a further input device to which the present disclosure is applied.
FIG. 12 is a model view showing use state of fingerprint sensor.

### Best Mode for Carrying Out the Invention

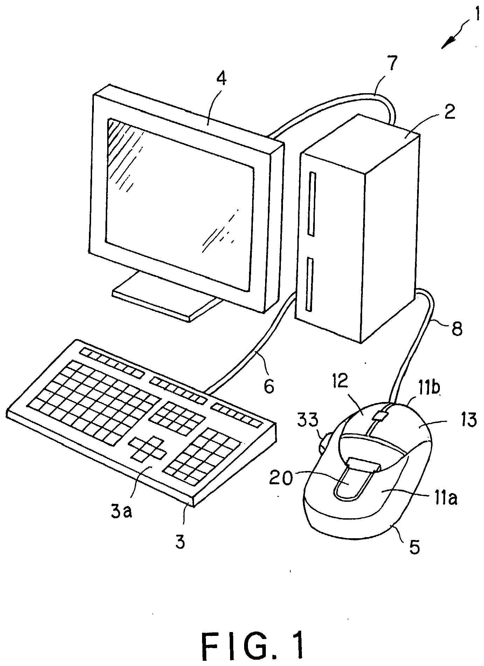

Eoplanation will now be given with reference to the attached drawings in connection with a system comprising a removable IC card and a mouse device according to the present invention is applied. As shown in FIG. 1, this mouse 5 is used in an information processing apparatus 1 such as personal computer, mobile telephone and/or PDA, etc. and this information processing apparatus comprises an apparatus body 2 in which hard disc, CPU (central Processing Unit), and RAM (Random Access Memory), etc. are included, a keyboard 3 for inputting characters and/or symbols, etc., a display unit 4 comprised of CRT (Cathode-Ray Tube) or Liquid Crystal panel, etc. on which processing data, etc. processed by computer are displayed, and mouse 5 serving as a position input device (unit) for specifying operation position on picture of the display unit 4. The apparatus body 2 and the keyboard 3 are connected through a connection cable 6, the apparatus body 2 and the display unit 4 are connected through a connection cable 7, and the apparatus body 2 and the mouse 5 are connected through a connection cable 8.

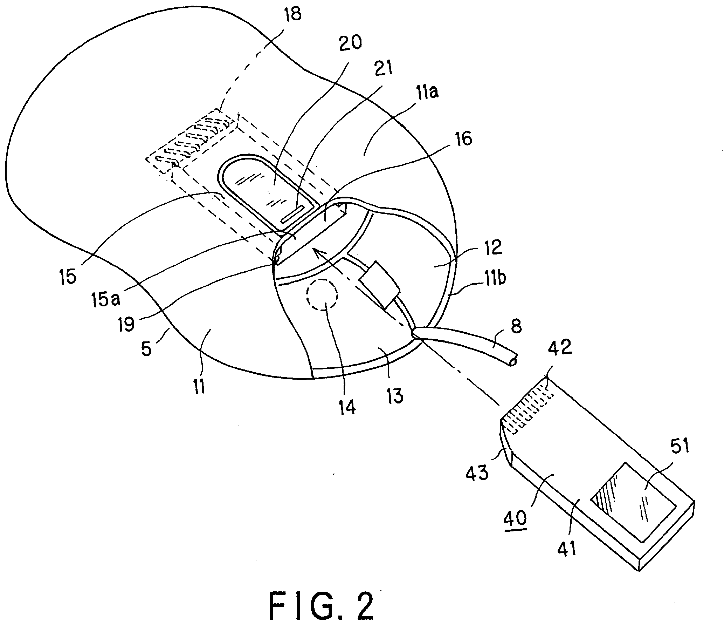

As shown in FIG. 2, the mouse 5 is formed by resin material having rigidity such as ABS resin, etc., and includes a casing 11 formed so that the operation surface 11a side constitutes curve in order to allow it to become easy to be grasped by palm of the hand. At the casing 11, at the front face side where fingertip is positioned when the mouse is grasped by the palm of the hand, there are provided a first operation portion 12 caused to undergo pressing operation by forefinger, etc., and a second operation portion 13 caused to undergo pressing operation by middle finger, etc. Only when the first operation portion 12 and the second operation portion 13 are caused to undergo pressing operation by user, they respectively press a first switch element and a second switch element mounted on printed wiring board disposed within the casing 11. Moreover, at the casing 11, the connection cable 8 for carrying out connection to the apparatus body 2 is derived from a front surface 11b of the side where the first operation portion 12 and the second operation portion 13 are provided. This connection cable 8 is connected to printed wiring board within the casing 11. Moreover, at this connection cable 8, in order to carry out transmission/reception of data to and from the apparatus body 2 of the information processing apparatus 1 by serial interface, signal lines for serial protocol bus state signal BS, serial protocol data signal SDIO, and serial clock SCLK, etc., and power supply voltage VCC line and ground line, etc. are disposed. This ground line is connected to shutter member 20 which will be described later. As the result of the fact that finger comes into contact with the shutter member 20, static electricity charged at the finger of user is removed from the finger tip, thus making it possible to precisely detect fingerprint. By this connection cable 8, the mouse 5 and the apparatus body 2 are connected by interface specification, e.g., USB (Universal Serial Bus), etc.

At the bottom face side of the casing 11, a detecting portion 14 for detecting movement direction and movement quantity of pointer indicating operation position displayed at picture of the display unit 4 is provided at substantially the central portion thereof. The detecting portion 14 is composed of a spherical body rotating in accordance with operation direction of user, a first detection element for detecting first rotation direction of this spherical body and rotation quantity thereof, and a second detection element for detecting a second rotation direction perpendicular to this first rotation direction and rotation quantity thereof. Further, when the first and second detection elements detect rotation of the spherical body, the detectingportion 14 moves pointer displayed on the display unit 4 in the X-axis direction and in the Y-axis direction on picture.

Further, at the operation surface 11a side of the casing 11, there is provided a loading portion 15 adapted so that IC card 40 for carrying out fingertip collation is loaded. The loading portion 15 is provided continuously to an insertion hole 16 for IC card provided at the operation surface 11 a of the casing 11. This loading portion 15 is formed so as to have substantially the same size as that of IC card. A bottom surface 15a of the loading portion 15 functions also as a guide portion for insertion/withdrawal in carrying out insertion/withdrawal of IC card. Further, at the innermost portion, a connector 18 serving as a connecting portion for realizing electrical connection to IC card is provided. Further, at the loading portion 15, a guide recessed portion 19 for guiding insertion/withdrawal of IC card and for limiting loading position is formed at the side surface in parallel to insertion direction of the IC card.

Further, at the operation surface 11a of the casing 11, there is provided a substantially rectangular opening portion 17 for allowing the fingerprint detecting portion of the IC card loaded with respect to the loading portion 15 to be faced to the external. A side surface 17a which constitutes this opening portion 17 is constituted by curve protruded toward the external, and is adapted so that finger head is easy to be inserted in carrying out fingerprint collation and user is caused to be difficult to be tired in view of human-engineering. It is to be noted that the opening portion 17 is provided so that the connector 18 is not faced to the external, so outward appearance does not becomes poor.

Further, at this opening portion 17, a shutter member 20 is disposed so that it can be opened or closed. The shutter member 20 which opens or closes this opening portion 17 ordinarilly closes the opening portion 17 to thereby prevent that dust, etc, is inserted into the loading portion 15 so that the connector 18 or the fingerprint detecting portion of IC card is stained. In addition, the shutter member 20 is formed by conductive material such as metallic plate, etc. grounded to the earth. Accordingly, finger is caused to come into contact with the shutter member 20 before fingerprint detection is carried out to thereby have ability to remove static electricity charged at finger of user. Thus, it is possible to precisely detect fingerprint.

This shutter member 20 is formed so as to take substantially rectangular shape having substantially the same dimensions as the opening portion 17 which faces the fingerprint detecting portion of the IC card loaded with respect to the loading portion 15 to the external to open the opening portion 17 to thereby face the fingerprint detecting portion to the external. Further, at the shutter member 20, a projected portion 21 for opening/closing is formed at the front face 11b side of the casing 11. Accordingly, user moves this projected portion 21 toward the rear surface 11c side by finger, thereby making it possible to open the opening portion 17.

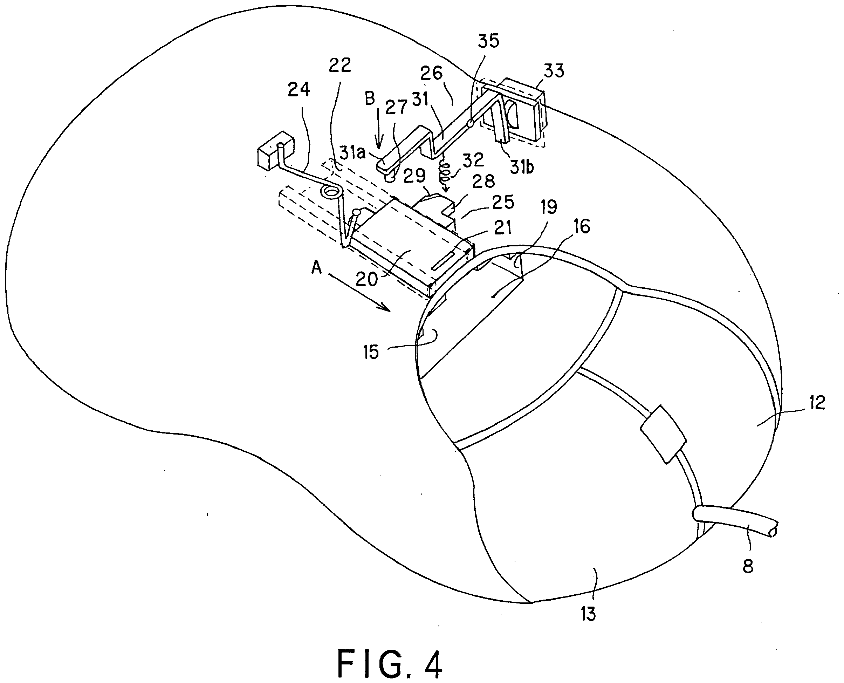

At this shutter member 20, opening/closing operation of the opening portion 17 is guided as the result of the fact that side edge portion in length direction is engaged with a guide portion 22 formed along movement direction of the shutter member 20 at the side edge portion of the opening portion 17. Further, as shown in FIG. 4, at the shutter member 20, one end of a biasing member 24 such as torsion coil spring or compression coil spring, etc. provided at the rear surface 11 c side of the loading portion 15 and serving to bias the shutter member 20 in a direction to close the opening portion 17 is held. Thus, the shutter member 20 is biased in the direction indicated by arrow A in FIG. 4 which is a direction to close the opening portion 17 at all times.

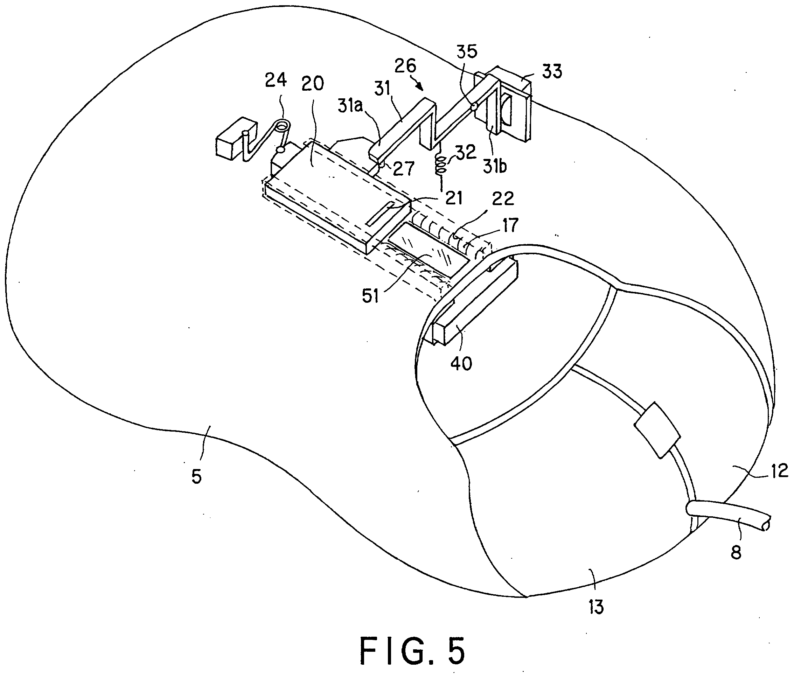

Further, at the shutter member 20, there is formed a holding piece 25 held at the position where the shutter member 20 opens the opening portion 17 by holding member 26 which will be described later at one side edge portion in length direction. At this holding piece 25, a substantially L-shaped holding surface 28 is formed at the front surface 11b side of the casing 11, and an inclination surface 29 formed so as to take substantially taper shape is formed at the rear surface 11c side. When the shutter member 20 is moved in the direction opposite to the direction indicated by arrow A in FIG. 4 to open the opening portion 17, the inclination surface 29 comes into contact with a projected portion 27 of holding member 26 which will be described later to rotate the holding member 26 in upper direction. Further, when the shutter member 20 is moved in the direction opposite to the direction indicated by arrow A in FIG. 5, the holding piece 25 is placed in the state where the projected portion 27 of the holding member 26 is held at the holding surface 28. Accordingly, the shutter member 20 biased in the direction indicated by arrow A in FIG. 5 by the biasing member 24 is held at the rear face 11c side, and is held in the state where the opening portion 17 has been opened.

The holding member 26 which holds this holding piece 25 at the rear face 11c side comprises a projected portion 27 held at the holding surface of the holding piece 25, a rotational arm 31 provided with this projected portion 27 at the front end thereof and rotatably supported, an extension coil spring 32 for biasing this rotational arm 31 in the direction indicated by arrow B in FIG. 4 to hold the holding piece 25, and a holding release button 33 adapted to press this rotational arm 31 to thereby bias the projected portion 27 which has hold the holding piece 25 in upper direction to release holding state of the projected portion 27.

The projected portion 27 held at the holding surface 28 of the holding piece 25 is projected at one end portion 31a lower surface side of the rotational arm 31. When the shutter member 20 is moved in the direction opposite to the direction indicated by arrow A in FIG. 4 to open the opening portion 17, the holding piece 25 formed at the side surface portion of the shutter member 20 is caused to come into contact with this projected portion 27, and is caused to ride onto the upper surface side of the holding piece 25 by an inclination surface 29 formed so as to have substantially taper shape. Further, as the result of the fact that the shutter member 20 is moved, the projected portion 27 is held at the holding surface 28 to hold the shutter member 20 which has been biased in the direction indicated by arrow A in FIG. 5 to close the opening portion 17 at the rear surface 11c side where the opening portion 17 is opened.

The rotational arm 31 where this projected portion 27 has been projected is formed by bending plate-shaped body, and is adapted so that the projected portion 27 is formed at one end portion 31a bent upwardly and the holding release button 33 which releases holding state of the projected portion 27 is disposed at the other end portion 31b bent downwardly. Further, the rotational arm 31 is adapted so that supporting member (not shown) is inserted through a supporting portion 35 provided substantially at the central portion thereof, and the rotational arm 31 is rotatably supported in the direction indicated by arrow B and in the direction opposite to the direction indicated by arrow B in FIG. 4. Further, at the rotational arm 31, the extension coil spring 32 which biases the rotational arm 31 in the direction indicated by arrow B in FIG. 4 is held at the projected portion 27 side by the supporting portion 35. Accordingly, at the rotational arm 31, one end portion 31a where the projected portion 27 is formed is biased in the direction indicated by arrow B in FIG. 4 by the extension coil spring 32 at all times.

The holding release button 33 disposed at the other end portion 31b bent downwardly of the rotational arm 31 and adapted for releasing holding state with respect to the holding surface of the projected portion 27 is projected at the outside of the casing 11, and is adapted so that user can operate from the external. When this holding release button 33 is pressed from the external, it rotates the rotation arm 31 in the direction opposite to the direction indicated by arrow B in FIG. 4 with the supporting portion 35 being as center. Namely, as the result of the fact that the other end portion 31b bent downwardly is pressed onto the holding release button 33, the rotational arm 31 is rotated in the direction opposite to the direction indicated by the arrow B with the supporting portion 35 being as center against biasing force of the extension coil spring 32. Thus, the projected portion 27 projected at one end side 31a lower surface side of the rotational arm 31 is moved in the direction opposite to the direction indicated by arrow B to release holding state with respect to holding surface 28 of the holding piece 25 to move the shutter member 20 in the direction indicated by arrow A.

The shutter member 20 and the holding member 26 as described above operate as follows. First, the shutter member 20 is biased by the biasing member 24 in the normal state so that it is placed at the position where the opening portion 17 is closed. At this time, the holding member 26 is positioned at the rear surface 11c side from the holding piece 25 so that one end portion 31a of the rotational arm 31 where the projected portion 27 is formed is biased by the extension coil spring 32 in the direction indicated by arrow B in FIG. 4.

Then, in order to open the opening portion 17 to face the fingerprint detecting portion of IC card where IC card is loaded with respect to the loading portion 15 to the external, the shutter member 20 is moved to the rear surface 11c side. When the shutter member 20 is moved toward the rear surface 11c side, the projected portion 27 projected at one end portion 31a of the rotational arm 31 is caused to come into contact with the substantially taper shaped inclination surface 29 formed at the rear surface 11c side of the holding piece 25, and is caused to ride onto the upper surface side of the holding piece 25. Further, when the shutter member 20 is moved toward the rear surface 11c side, the projected portion 27 is held at the holding surface 28 of the holding piece 25 as the result of the fact that the one end portion 31a side of the rotational arm 31 is biased by the extension coil spring 32. Thus, the shutter member 20 is held at the rear surface 11c side as the result of the fact that the holding piece 25 is held at the projected portion 27 against biasing force of the biasing member 24. Accordingly, the opening portion 17 is opened so that the fingerprint detecting portion of IC card loaded with respect to the loading portion 15 is faced to the external. For this reason, user can easily carry out collation of fingerprint.

Then, when fingerprint collation is completed, the shutter member 20 is moved, in order to protect the fingerprint detecting portion and the connector 18 from dust, etc., in the direction indicated by arrow A in FIG. 5 to close the opening portion 17. At this time, when the holding release button 33 projected from the side surface of the casing 11 is internally pressed by user, it presses the other end portion 31b bent downwardly of the rotational arm 31. At the rotational arm 31, as the result of the fact that the other end portion 31b is pressed, one end portion 31a bent upwardly is rotated in the direction opposite to the direction indicated by arrow B in FIG. 5 with the supporting portion 35 being as center against biasing force of the extension coil spring 32. Accordingly, the projected portion 27 projected at one end portion 31a is also moved in the direction opposite to the direction indicated by arrow B in FIG. 5 so that holding state from the holding surface of the holding piece 25 is released. Thus, the shutter member 20 is moved in the direction indicated by arrow A in FIG. 4 by biasing force of the biasing member 24 to close the opening portion 17.

Then, explanation will be given with reference to FIG. 2 in connection with IC card 40 loaded with respect to the loading portion 15. This IC card 40 includes a substantially rectangular plate shaped card body 41 which constitutes casing obtained by molding synthetic resin, wherein a printed wiring board on which one or plural semiconductor elements where fingerprint sensor and control circuits thereof are constituted are mounted is included within this card body 41.

At the side of one short side of the card body 41, terminal portions 42 comprised of plural electrodes are formed in a manner extending from the front surface serving as insertion end with respect to the loading portion 15 toward the bottom surface. Transmission/reception of data to and from the loading portion 15 is carried out by serial interface. In practical sense, the terminal portion 42 at least includes input terminal for serial protocol bus state signal, input terminal for serial protocol data signal, input terminal for serial clock and power supply terminal.

Moreover, at one corner portion of the front face side where the terminal portions 42 are formed of the card body 41, a chamfering portion 43 is provided in order that user can easily discriminate insertion direction with respect to the loading portion 15. In addition, at the rear surface side of the upper surface of the card body 41, there is provided a fingerprint detecting portion 51 adapted for detecting fingerprint of user as the result of the fact that finger head of user is pressed.

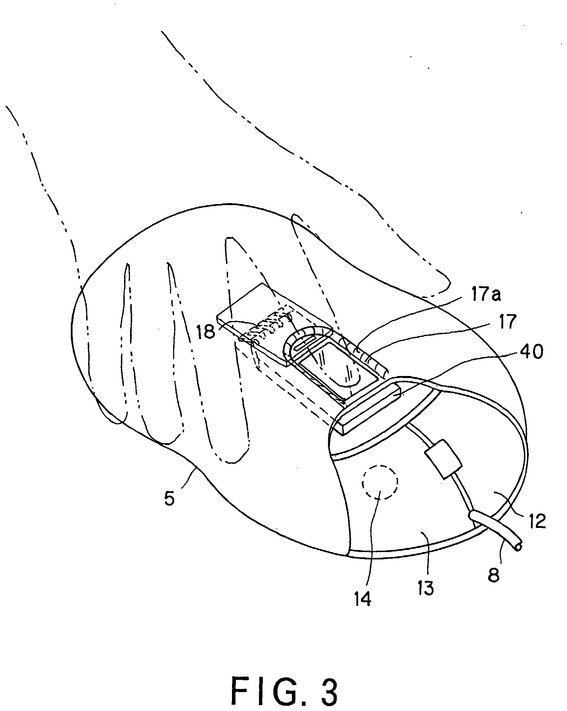

A method of inserting IC card 40 as described above with respect to the loading portion 15 will be explained. As shown in FIGS. 2 and 3, the IC card 40 is inserted into the insertion hole 16 of the casing 11 in the state where the upper surface is caused to be upper side with the front surface where the terminal portions 42 are provided of the card body 41 being as insertion end. At this time, the IC card 40 is inserted into the loading portion 15 while being guided by the guide recessed portion 19 and the bottom surface 15a. Thus, the terminal portions 42 of the IC card are electrically connected to the connector 18 of the loading portion 15. In addition, taking-out operation from the loading portion 15 of the IC card 40 can be carried out by sliding the IC card 40 in the insertion hole 16 direction.

It is to be noted that, in addition to IC card 40 for fingerprint collation, IC card in which memory element used as an external memory unit of the information processing apparatus 1 is included may be loaded with respect to the loading portion 15.

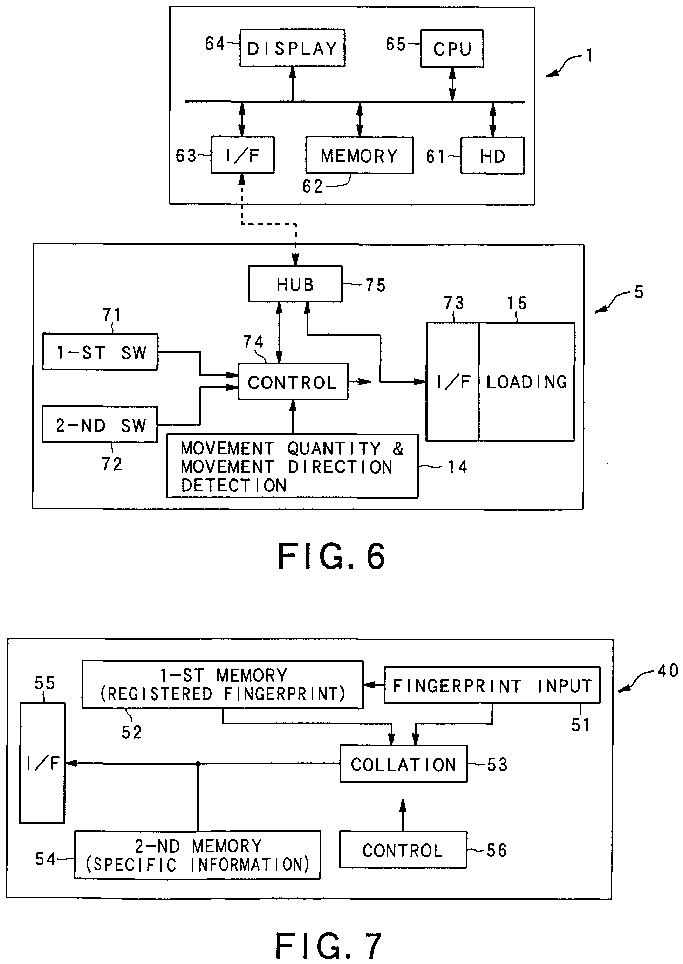

The circuit configuration of the information processing apparatus 1 to which mouse 5 as described above is connected will be explained. As shown in FIG. 6, this information processing apparatus 1 is an apparatus having substantially the same configuration as ordinary personal computer, and comprises a hard disc 61 serving as a memory unit in which various application programs and/or processing data, etc. are preserved (stored), a Random Access Memory (hereinafter simply referred to as RAM) 62 in which programs, etc. preserved on the hard disc 61 are loaded, an interface 63 such as USB, etc. to which keyboard 3 and/or mouse 5 are connected, a display unit 64 for displaying data, etc. to be processed, and a Central Processing Unit (hereinafter referred to as CPU) for controlling the entire operation on the basis of program, etc. loaded in the RAM 62. The CPU 65 reads out, on the basis of input from the keyboard and/or the mouse 5, a predetermined application from the hard disc 61 into the RAM 62 to display it on the display unit 64 and to carry out data processing. The CPU 65 is adapted so that when user attempts to provide access to a specific computer, or attempts to provide an access to a specific file preserved on the hard disc 61, it displays its effect on the display unit 64 in order to carry out certification request by fingerprint collation. In addition, only when the CPU 65 receives a certification signal indicating that certification has been obtained by fingerprint collation from the IC card 40, it permits access to a specific computer or access to a specific file preserved on the hard disc 61.

The mouse 5 connected to the information processing apparatus 1 through the interface 63 comprises, as shown in FIG. 6, a first switch element 71 pressed by the first operation portion 12 provided at the casing 11, a second switch element 72 pressed by the second operation portion 13 provided at the casing 11, the detecting portion 14 for detecting rotation direction and rotation quantity of spherical body, a serial/parallel parallel/serial interface 73 for carrying out transmission/reception of data to and from the IC card 40 loaded with respect to the loading portion 15, a control unit 74 for generating an operation signal outputted to the information processing apparatus 1 on the basis of signals inputted from the first switch element 71, the second switch element 72 and the detecting unit 14, and a Hub 75 for selectively outputting a signal from the interface 73 and a signal from the control unit 74 to the information processing apparatus 1.

When input is provided from the first switch 71, the control unit 74 generates a first operation signal to output it to the information processing apparatus 1 through the Hub 75. When input from the second switch element 72 is provided, the control unit 74 generates a second operation signal to output it to the information processing apparatus 1 through the Hub 75. Moreover, when rotation direction and rotation quantity of spherical body are inputted from the detecting portion 14, the control unit 74 generates a third operation signal corresponding thereto to output it to the information processing apparatus 1 through the Hub 75. The information processing apparatus 1 is supplied with first to third operation signals from the mouse 5 through the interface 63. Thus, the CPU 65 carries out data processing corresponding to the first operation signal or the second operation signal, and moves pointer displayed on picture of the display unit 64 in accordance with the third operation signal.

Further, when the IC card 40 is loaded with respect to the loading portion 15 and certification signal or non-certification signal is inputted from the IC card 40 through the interface 63, the Hub 75 outputs these signals to the interface 63 of the information processing apparatus 1. At the information processing apparatus 1, when the certification signal is inputted through the interface 63, e.g., the CPU 65 permits access to a specific computer or access to a specific file preserved on the hard disc 61, etc. When the non-certification signal is inputted, the CPU 65 inhibits access to a specific computer or access to a specific file preserved on the hard disc 61.

Further, the circuit configuration of the IC card 40 loaded with respect to the loading portion 15 provided at the mouse 5 will be explained. This IC card 40 comprises, as shown in FIG. 7, the fingerprint detecting portion 51 onto which finger head of user is pressed, a first memory 52 for storing registered fingerprint, a collation unit 53 for collating fingerprint inputted from the fingerprint detecting unit 51 and fingerprint preserved in the first memory 52, a second memory 54 for storing serial No. of the IC card 40 and related information relating to fingerprint registered in the first memory 52, a serial/parallel parallel/serial interface 55 for carrying out transmission/reception of certification signal to and from the mouse 5, and a control unit 56 for controlling the entire operation.

The fingerprint detecting portion 51 includes a fingerprint sensor in which barrier metal consisting of Ti, etc. and/or metallic wiring such as Al, etc. are formed on a substrate where elements such as transistor, etc. are formed and passivation film consisting of insulating material is formed at the uppermost layer. In this fingerprint sensor, capacitor is formed between finger and metallic wiring as the result of the fact that finger of user is pressed onto the passivation film. Since distance between each metallic wiring and finger changes in accordance with uneven state of fingerprint, there take place differences in capacity of respective capacitors constituting the fingerprint sensor. Accordingly, the fingerprint detecting portion 51 detects this difference to thereby extract feature points of fingerprint, e.g., branch or center of skin upheaval line. Further, when fingerprint registration is carried out, the fingerprint detecting portion 51 outputs fingerprint data which is feature point of fingerprint to the first memory 52. Further, fingerprint data which is feature point of fingerprint to be registered are preserved into the first memory 52 every identification No. In addition, when fingerprint collation is carried out, the fingerprint detecting portion 51 outputs fingerprint data to the collation unit 53.

When fingerprint collation is carried out, the collation unit 53 collates fingerprint data inputted from the fingerprint detecting portion 51 and fingerprint data stored in the first memory 52 to carry out certification of user. Further, when fingerprint data which has been inputted from the fingerprint detecting unit 51 and fingerprint data which has been read out from the first memory 52 are in correspondence with each other so that certification is taken, the collation unit 53 outputs a certification signal to the interface 55. Further, when fingerprint data which has been inputted from the fingerprint detecting unit 51 and fingerprint data which has been read out from the first memory 52 are not in correspondence with each other so that certification is not taken, the collation unit 53 outputs a non-certification signal to the interface 55.

Related information relating to fingerprint data registered in the first memory 52 is preserved in the second memory 54. Specifically, names or ID Nos. of fingerprint registrant and serial Nos. of IC cards are preserved in the second memory 54 as related information. Further, when certification is taken at the collation unit 53, the second memory 54 outputs, along with certification signal, data of user in which certification has been taken to the interface 55.

The control unit 56 serves to control the entirety of the IC card 40, and drives the fingerprint detecting portion 51 when, e.g., finger head is pressed onto the fingerprint detecting portion 51 and controls write operation of fingerprint data to be registered into the first memory 52, write operation of related information of fingerprint data registered into the second memory 54, and read-out operation of this related information.

It is to be noted that this IC card is driven as the result of the fact that power is supplied from the apparatus body 2 through the mouse 5. It is a matter of course that the IC card 40 may be driven as the result of the fact that battery is included.

Then, a series of operations from the time when the IC card 40 is loaded with respect to the loading portion 15 of the mouse 5 thereafter to carry out fingerprint collation will be explained.

First, a method of loading the IC card 40 with respect to the loading portion 15 will be explained. As shown in FIGS. 2 and 3, the IC card 40 is inserted into the insertion hole 16 of the casing 11 in the state where the upper surface is caused to be upper side with the front fact where the terminal portions 42 are provided of the card body 41 being as insertion end. At this time, the IC card 40 is inserted into the loading portion 15 as the result of the fact that it is guided by the guide recessed portion 19 and the bottom surface 15a. Thus, the terminal portions 42 of the IC card 40 are electrically connected to the connector 18 of the loading portion 15. In addition, when the IC card 40 is completely loaded with respect to the loading portion 15, the opening portion 17 is opened so that there results the state where the fingerprint detecting portion 51 is faced to the external.

Here, a method of registering fingerprint with respect to the IC card 40 will be explained. As shown in FIGS. 6 and 7, when user operates the keyboard 3 or the mouse 5, the control unit 56 of the IC card 40 first receives command from the information processing apparatus 1 so that it is placed in fingerprint registration mode. User allows the finger head to come into contact with the shutter member 20 to thereby remove static electricity charged at finger thereafter to move the shutter member 20 toward the rear surface 11c side of the casing 11 to thereby open the opening portion 17. Then, when user admits finger head from the opening portion 17 thereinto to allow the finger head to be pressure in contact with the fingerprint detecting portion 51, the fingerprint detecting portion 51 detects this to detect differences of capacitances taking place in respective capacitors constituting the fingerprint sensor to thereby extract feature point of fingerprint, e.g., branch or center of skin upheaval line to generate fingerprint data. At this time, since static electricity charged at finger of user has been removed by the shutter member 20, the fingerprint detecting portion 51 can precisely detect difference of capacitance and can precisely detect fingerprint. Further, the fingerprint detecting portion 51 adds ID No. to this fingerprint data to output it to the first memory 52. Thus, fingerprint data of user is preserved, i.e., registered into the first memory 52.

It is to be noted that information relating to fingerprint data to be registered can be preserved into the IC card 40. Namely, in the information processing apparatus 1, user operates the keyboard 3 or the mouse 5 to thereby input name or ID No. of fingerprint registrant with respect to the IC card 40, thus making it possible to record this input data into the second memory 54 of the IC card 40 through the mouse 5 connected to the interface 63.

Then, a method of collating fingerprint will be explained. When user attempts to provide access to a specific computer, or attempts to provide access to a specific file preserved on the head disc 61, etc. by the keyboard 3 or the mouse 5 serving as an operation unit of the information processing apparatus 1, e.g., the CPU 65 displays certification request by fingerprint collation on the display unit 64 as shown in FIG. 6.

In response thereto, as shown in FIG. 3, user removes static electricity thereafter to move the shutter member 20 to open the opening portion 17 to admit the finger head from the opening portion 17 thereinto to press it onto the fingerprint detecting portion 51 of the IC card 40 loaded with respect to the loading portion 15 of the mouse 5. Thus, the fingerprint detecting portion 51 detects this to detect differences of capacitances taking place at respective capacitors constituting the fingerprint sensor to thereby extract feature points of fingerprint, e.g., branch or center of skin upheaval line to generate fingerprint data to output it to the collation unit 53. The collation unit 53 reads out registered fingerprint data from the first memory 52 to collate the fingerprint data which has been read out from this first memory 52 and fingerprint data which has been inputted from the fingerprint detecting portion 51. Further, when the fingerprint data which has been inputted from the fingerprint detecting portion 51 and the fingerprint data which has been read out from the first memory 52 are in correspondence with each other so that certification has been taken, the collation unit 53 outputs a certification signal to the interface 55. Along therewith, the control unit 56 outputs related information of user in which certification has been taken to the interface 55. When the information processing apparatus 1 has received certification signal through the mouse 5, the CPU 65 permits access to a specific computer, or access to a specific file preserved on the hard disc 61.

Further, when the fingerprint data which has been inputted from the fingerprint detecting portion 51 and the fingerprint data which has been read out from the first memory 52 are not in correspondence with each other so that certification has not been taken, the collation unit 53 outputs non-certification signal to the interface 55. When the information processing apparatus 1 has received the non-certification signal through the mouse 5, the CPU 65 inhibits access to a specific computer, or access to a specific file preserved on the hard disc 61.

It is to be noted that taking-out operation from the loading portion 15 of the IC card 40 can be carried out by sliding the IC 40 card in the insertion hole 16 direction through the opening portion 17.

Further, IC card within which memory element used as an external memory unit of the information processing apparatus 1 is included can be also loaded with respect to this loading portion 15. In this case, the CPU 65 executes application program preserved on the hard disc 61 to thereby carry out read-out of data such as file name or data size, etc. from memory element such as flash memory, etc. within IC card. Further, in accordance with an operation signal inputted from the keyboard 3 or the mouse 5, the CPU 65 carries out read-out of data from memory element of IC card loaded with respect to the loading portion 15 of the mouse 5, and carries out write operation of data into the memory element.

In accordance with the mouse 5 which is input device of the information processing apparatus 1 as described above, even in the case of information processing apparatus 1 having less number of connecting portions which carry out connection to the peripheral equipment, the IC card 40 having fingerprint detection/collation function is loaded with respect to the loading portion 15 of the mouse 5, thereby making it possible to easily add fingerprint detection/collation processing to the information processing apparatus 1.

Moreover, in accordance with the mouse 5 which is input device of the information processing apparatus 1 as described above, since shutter member 20 is provided at the opening portion 17 which faces the loading portion 15 where the IC card 40 is loaded to the external, it is prevented that when the IC card 40 is not loaded, dust, etc. is admitted into the loading portion 15. Thus, it is possible to prevent that the connector 18 is stained by dust, etc. Further, in the mouse 5, also when the IC card 40 is loaded, it is prevented that dust, etc. is attached to the fingerprint detecting portion. Thus, it is possible to precisely detect fingerprint. Further, in the mouse 5, since the shutter member 20 consisting of conductive material connected to the earth is provided, user touches the shutter member 20 before detection of fingerprint, thereby making it possible to remove static electricity charged at finger. Accordingly, in the fingerprint detection method using the electrostatic capacity detection method, it is possible to precisely detect differences of capacitances of respective capacitors constituting the fingerprint sensor. Thus, it is possible to precisely identify fingerprint.

In addition to the above, since the mouse 5 is a peripheral equipment that user most frequently handles at the time of use of the information processing apparatus 1, and a work for pressing finger head onto the fingerprint detecting portion 51 can be carried out by this mouse 5, convenience in use in carrying out fingerprint collation can be improved. Further, the loading portion 15 provided at this mouse 5 can be commonly used in the IC card 40 for fingerprint collation and IC card for memory. In addtion, in the mouse 5, since the opening portion 17 which faces the fingerprint detecting portion 51 to the external is provided at the operation surface 11a of the casing 11, it is possible to easily carry out fingerprint collation work.

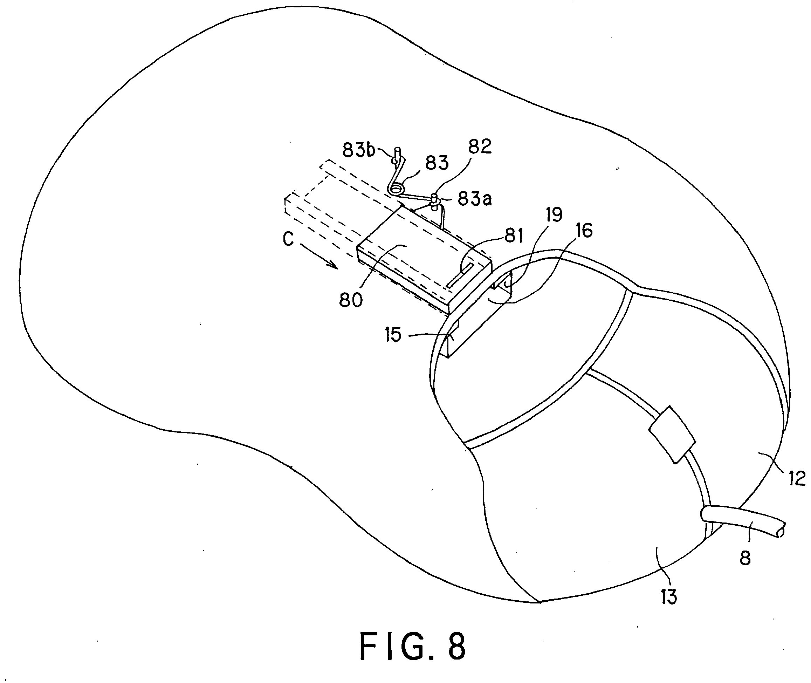

Then, the input device to which the present disclosure is applied may be formed as follows. It is to be noted that the same reference numerals are respectively attached to the same members as the above-described mouse 5, and its detail will be omitted. As shown in FIG. 8, a shutter member 80 which opens or closes opening portion 17 of this mouse 5 is formed so as to take substantially rectangular shape having substantially the same dimensions as the opening portion 17 similarly to the above-mentioned shutter member 20, and is adapted so that a projected portion 81 is formed at the operation surface 11a side. Further, the shutter member 80 is formed by conductive material such as metallic plate, etc. grounded to the each. Accordingly, finger is caused to come into contact with the shutter member 80 before fingerprint detection is carried out, thereby making it possible to remove static electricity charged at finger of user. Thus, it is possible to precisely detect fingerprint.

This shutter member 80 is engaged with guide portion 22 formed at side edge portion of opening portion 17 so that opening/closing operation of the opening portion 17 is guided. Moreover, at the side surface portion of the shutter member 80, a holding portion 82 is provided. A torsion coil spring 83 which feeds the shutter member 80 in opening/closing direction thereof provided at the side surface side of the loading portion 15 is held at the holding portion 82.

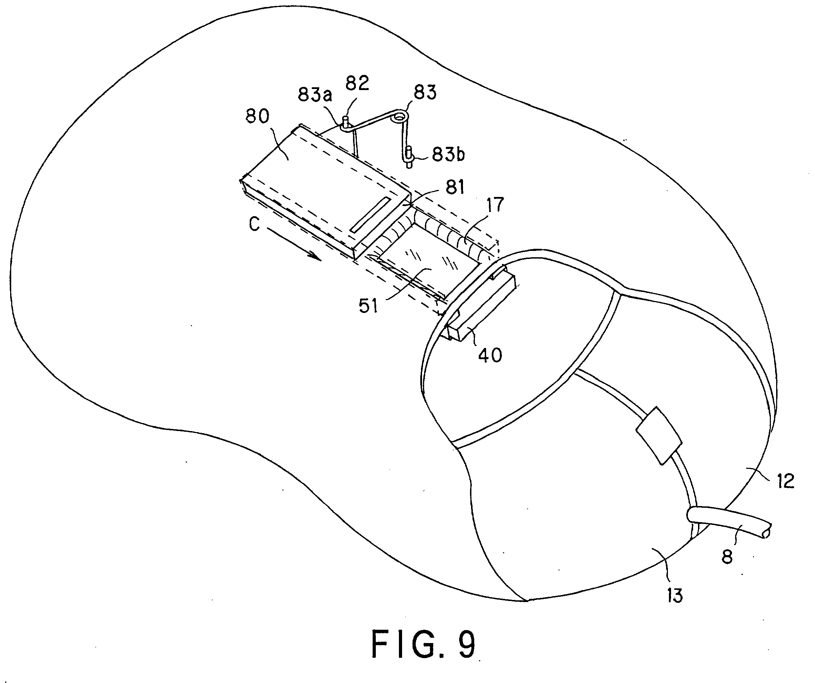

The torsion coil spring 83 held at the holding portion 82 of the shutter member 80 is adapted so that one end portion 83a is rotatably held at the holding portion 82 of the shutter member 80, and the other end portion 83b is rotatably held at holding projected portion of casing 11 (not shown). In the state where the shutter member 80 closes the opening portion 17, this torsion coil spring 83 biases the shutter member 80 in the direction indicated by arrow C in FIG. 8 to close the opening portion 17 as shown in FIG. 8. Moreover, in the state where the shutter member 80 is placed in the state where the opening portion 17 is opened, the torsion coil spring 83 biases the shutter member 80 in the direction opposite to the direction indicated by arrow C in FIG. 9 to open the opening portion 17 as shown in FIG. 9. Accordingly, the shutter member 80 is caused to undergo feed operation in opening or closing direction until middle portion by user, whereby the torsional coil spring 83 is inverted. As the result of the fact that this biasing direction is changed, the shutter member 80 is caused to undergo feed operation in the rear surface 11c direction or in the front face 11b direction of the casing 11, thus making it possible to carry out opening/closing operation of the opening portion 17.

Namely, when the shutter member 80 is moved from the state where the shutter member 80 closes the opening portion 17 toward the read surface 11c side, one end portion 83a held at the holding portion 82 of the shutter member 80 is also moved toward the rear surface 11c side as shown in FIG. 9 so that the torsion coil spring 83 is inverted with the other end portion 83b held at the holding projected portion provided at the casing 11 side being as center. Thus, the torsion coil spring 83 biases the shutter member 80 toward the read surface 11c side.

Further, when the shutter member 80 is moved from the state where the opening portion 17 is opened toward the front surface 11b side, one end portion 83a held at the holding portion of the shutter member 80 is also moved toward the front surface 11b side as shown in FIG. 8, and the torsion coil spring 83 is inverted with the other end portion 83b being as center. Thus, the torsion coil spring 83 biases the shutter member 80 toward the front surface 11b side.

In accordance with the input device provided with such shutter member 80, it is possible to bias the shutter member 80 in the opening direction or in the closing direction of the opening portion 17 by biasing force of the torsion coil spring 83. Accordingly, in this input device, user first allows the shutter member 80 to undergo feed operation, thereby making it possible to automatically open or close the opening portion 17. Moreover, in accordance with this input device, since the shutter member 80 is provided at the opening portion 17 which faces the loading portion 15 where the IC card 40 is loaded toward the external, it is prevented that dust, etc. is admitted into the loading portion 15 when the IC card 40 is not loaded. Thus, it is possible to prevent that the connector 18 is stained by dust, etc. Further, in accordance with this input device, also when the IC card 40 is loaded within the loading portion 15, it is possible to prevent that dust, etc. is attached to the fingerprint detecting portion 51. Thus, it is possible to precisely detect fingerprint. Further, in the input device of the present disclosure, since the shutter member 80 consisting of conductive material connected to the earth is provided, user is caused to come into contact with it before fingerprint detection, thereby making it possible to remove static electricity charged at finger. Accordingly, in the fingerprint detection method using the electrostatic capacity type detection method, it is possible to precisely detect differences of capacitances of respective capacitors constituting the fingerprint sensor. Thus, it is possible to precisely identify fingerprint.

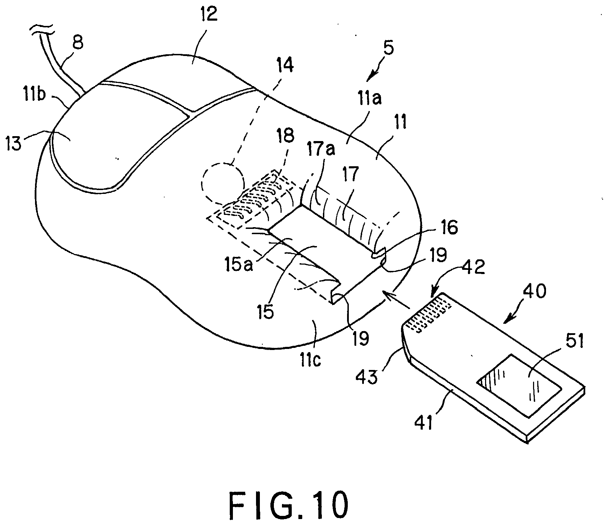

It is to be noted that while explanation has been given as described above in connection with the input device adapted so that IC card having fingerprint collation function is loaded from the front surface 11b side of the casing 11 of the mouse 5, the present invention may be adapted so that IC card 40 having fingerprint collation function is loaded from the rear surface 11c side of the casing 11 side as shown in FIG. 10. Moreover, in the present disclosure, the opening portion 17 may be opened at all times without providing the shutter member 20.

Further, the input device to which the present disclosure is applied uses not only the electrostatic capacity type detection method, but also the optical type detection method. In the optical detection method, the fingerprint detecting portion of the IC card 40 includes an image pick-up unit such as CCD or line sensor, etc. and a back light for irradiating pressing portion onto which finger head is pressed, whereby when finger is pressed, the back light is caused to be turned ON to pick up image of fingerprint at the image pick-up unit. The fingerprint detecting portion extracts feature point of fingerprint, e.g., branch or center of skin upheaval line from the imaged fingerprint. Further, when fingerprint registration is carried out, the fingerprint detecting portion outputs fingerprint data which is feature point of fingerprint to the first memory 52. Further, fingerprint data which are feature points of fingerprint to be registered are preserved every identification number into the first memory 52. In addition, the fingerprint detecting portion outputs fingerprint data to the collation unit 53 when fingerprint collation is carried out.

Also in the mouse provided with fingerprint detecting portion using this optical type detection method, since shutter member 20 which opens or closes the opening portion 17 which faces the fingerprint detecting portion toward the external is provided, it is prevented that dust, etc. is admitted into the loading portion 15 when IC card 40 is not loaded. Thus, it is possible to prevent that the connector 18 is stained by dust, etc. In addition, it is prevented that dust, etc. is attached to the image pick-up unit such as CCD, etc. also when IC card 40 is loaded. Thus, it is possible to precisely detect fingerprint.

It is to be noted that, in the present disclosure, in addition to the mouse 5 as described above, IC card 40 having fingerprint collation function may be loaded with respect to various input devices such as remote control device for carrying out remote control of electronic equipment, etc. For example, the present disclosure may in a related example scenario be applied to keyboard 3 that user most frequently handles at the time of use of information processing apparatus 1 along with mouse 5. As shown in FIG. 11, in this keyboard 3, loading portion 15 is provided in such a manner that insertion hole 16 is provided at the side surface 3b of the operation surface 3a side. Further, at the operation surface 3a, opening portion 17 for facing the fingerprint detecting portion 51 of the IC card 40 toward the external is provided for the purpose of making it easy to carry out fingerprint collation work. This opening portion 17 is adapted so that the side surface 3b side is opened for making it easy to take out IC card 40 through insertion hole 16. Further, side surface 17a which constitutes this opening portion 17 is constituted by curve protruded toward the external, and is adapted so that finger head is easy to be inserted in carrying out fingerprint collation and user is difficult to be tired in view of human-engineering. Further, at this opening portion 17, there is disposed shutter member 20 for preventing that dust, etc. is attached to connector 18 with respect to IC card 40 formed within the loading portion 15 and/or fingerprint detecting portion 51 of the IC card, and for removing static electricity charged at finger of user in carrying out fingerprint collation. It is to be noted that IC card as external memory unit may be loaded with respect to this loading portion 15.

Moreover, connection between the information processing apparatus 1 and the mouse 5 is not limited to the above-described USB, but interface such as IEEE (Institute of Electrical and Electronics Engineers) 1394, etc. may be employed and both wire system and wireless system may be employed. Further transmission/reception of data between the IC card 40 attached at the loading portion 15 and the mouse 5 may be also carried out by wireless system. In addition, as the number of IC cards which can be loaded with respect to the loading portion 15, plural IC cards may be employed. In this case, IC card 40 for fingerprint collation and IC card for memory may be loaded with respect to the loading portion 15, e.g., in a laminated manner.

### Industrial Applicability

As explained above in detail, in accordance with the input device according to the present disclosure, even in the case of host equipment having less number of connecting portions, IC card having fingerprint collation function is loaded with respect to the loading portion of the input device, thereby making it possible to easily add fingerprint collation function to the host equipment. Further, since this input device is a device that user most frequently handles at the time of use of host equipment, it is possible to easily carry out work for pressing finger head onto the fingerprint detecting portion.

Further, in accordance with the input device according to the present disclosure, since fingerprint detecting portion for detecting fingerprint of user and shutter portion provided at opening portion which faces this fingerprint detecting portion toward the external are provided, the fingerprint detecting portion can be closed by the shutter portion when fingerprint detection is not carried out. Accordingly, it is possible to prevent that dust, etc. is admitted to stain the fingerprint detecting portion.

In addition, in accordance with the input device according to the present disclosure, metallic shutter portion is provided, thereby making it possible to remove static electricity charged at finger of user before fingerprint detection. Accordingly, the fingerprint detecting portion can precisely detect fingerprint of user.

## Claims

1. A system comprising:
a removable IC card; and
a mouse device (5) including:
a device casing (11) provided with an operation portion (12, 13, 14) adapted to operate a host equipment (1), and connected to the host equipment,
wherein the device casing comprises:
a loading portion (15) adapted to receive the IC card (40) within the device casing;
a connecting portion (18) provided at one end of the loading portion for electrically connecting the IC card to the mouse device; and
an insertion hole (16) through which the IC card is inserted into the loading portion,
**characterised in that**:
one surface of the IC card is provided with a fingerprint detecting portion (51);
the mouse device further includes an opening portion (17) within the device casing into the loading portion which exposes the fingerprint detecting portion of the IC card to the outside of the device casing; and
wherein the fingerprint detecting portion is exposed to the outside of the device casing through the opening portion by loading the IC card with respect to the loading portion.

2. The system as set forth in claim 1;
wherein a side surface (17a) which constitutes the opening portion is constituted by protruded curve so that it becomes easy to position finger head of user when fingerprint collation is carried out.

3. The system as set forth in claim 1;
wherein a shutter member (20) which opens or closes the opening portion is provided at the opening portion.

4. The system as set forth in claim 3,
wherein the shutter member is comprised of a conductive plate-shaped body.

5. The system as set forth in claim 3, comprising:
a holding member (26) disposed within the device casing, a holding release button (33) projected toward the device casing outside being provided at one end portion thereof, a projected portion (27) for holding the shutter member being formed at the other end portion thereof, the holding member being rotatably supported,
wherein the shutter member is biased in a front surface direction of the device casing by a biasing member (24) disposed at the rear surface side of the device casing; and
wherein the holding member holds the shutter member by the projected portion when the shutter member is moved toward the device casing rear surface side to thereby open the opening portion, and the holding release button is pressed in the state where the shutter member is held so that holding state with respect to the shutter member is released to automatically close the opening portion.

6. The system as set forth in claim 3,
wherein the shutter member is engaged with a biasing member (83) at the side surface thereof; and
wherein the biasing member biases the shutter member in feed direction as the result of the fact that the shutter is caused to undergo feed operation in an opening direction or in a closing direction of the opening portion to open or close the opening portion.

7. The system as set forth in claim 1,
wherein the fingerprint detecting portion measures difference of electrostatic capacity corresponding to pattern of finger to thereby detect fingerprint.

8. The system as set forth in claim 1,
wherein the insertion hole opens from a front surface (11b) of the device casing.

9. The system as set forth in claim 1,
wherein the insertion hole opens from a rear end (11c) of the device casing.

## Patentansprüche

1. System, umfassend:
eine entfernbare Chipkarte, und
eine Mausvorrichtung (5), umfassend:
ein Vorrichtungsgehäuse (11), das mit einem Betriebsabschnitt (12, 13, 14) bereitgestellt ist, der eingerichtet ist, um ein Host-Gerät (1) zu bedienen, und mit dem Host-Gerät verbunden ist,
wobei das Vorrichtungsgehäuse umfasst:
einen Ladeabschnitt (15), der eingerichtet ist, um die Chipkarte (40) innerhalb des Vorrichtungsgehäuses aufzunehmen,
einen Verbindungsabschnitt (18), der an einem Ende des Ladeabschnitts zum elektrischen Verbinden der Chipkarte mit der Mausvorrichtung bereitgestellt ist, und
ein Einführungsloch (16), durch welches die Chipkarte in den Ladeabschnitt eingeführt wird,
**dadurch gekennzeichnet, dass**
eine Fläche der Chipkarte mit einem Fingerabdruckdetektionsabschnitt (51) bereitgestellt ist,
die Mausvorrichtung ferner einen Öffnungsabschnitt (17) innerhalb des Vorrichtungsgehäuses in den Ladeabschnitt umfasst, der den Fingerabdruckdetektionsabschnitt der Chipkarte zur Außenseite des Vorrichtungsgehäuses freilegt, und
wobei der Fingerabdruckdetektionsabschnitt zur Außenseite des Vorrichtungsgehäuses über den Öffnungsabschnitt durch Laden der Chipkarte in Bezug auf den Ladeabschnitt freigelegt wird.

2. System nach Anspruch 1,
wobei eine Seitenfläche (17a), die den Öffnungsabschnitt bildet, durch eine hervorstehende Rundung gebildet ist, so dass es leicht wird, eine Fingerkuppe eines Benutzers zu positionieren, wenn ein Fingerabdruckvergleich ausgeführt wird.

3. System nach Anspruch 1,
wobei ein Verschlusselement (20), das den Öffnungsabschnitt öffnet oder schließt, an dem Öffnungsabschnitt bereitgestellt ist.

4. System nach Anspruch 3,
wobei das Verschlusselement aus einem leitfähigen plattenförmigen Körper gebildet ist.

5. System nach Anspruch 3, umfassend:
ein Halteelement (26), das innerhalb des Vorrichtungsgehäuses angeordnet ist, einen Haltefreigabeknopf (33), der zur Außenseite des Vorrichtungsgehäuses hin hervorsteht und an einem Endabschnitt davon bereitgestellt ist, einen hervorstehenden Abschnitt (27) zum Halten des Verschlusselements, der an dem anderen Endabschnitt davon ausgebildet ist, wobei das Halteelement drehbar gestützt wird,
wobei das Verschlusselement in Vorderflächenrichtung des Vorrichtungsgehäuses durch ein Vorspannungselement (24), das an der Rückflächenseite des Vorrichtungsgehäuses angeordnet ist, vorgespannt wird, und
wobei das Halteelement das Verschlusselement durch den hervorstehenden Abschnitt hält, wenn das Verschlusselement zur Rückfläche des Vorrichtungsgehäuses hin bewegt wird, um dadurch den Öffnungsabschnitt zu öffnen, und der Haltefreigabeknopf in den Zustand gedrückt wird, in dem das Versschlusselement gehalten wird, so dass der Haltezustand in Bezug auf das Verschlusselement freigegeben wird, um den Öffnungsabschnitt automatisch zu schließen.

6. System nach Anspruch 3,
wobei das Verschlusselement mit einem Vorspannungselement (83) an der Seitenfläche davon in Eingriff kommt, und
wobei das Vorspannungselement das Verschlusselement in Zufuhrrichtung als Folge der Tatsache vorspannt, dass veranlasst wird, dass der Verschluss einer Zufuhroperation in Öffnungsrichtung oder in Schließrichtung des Öffnungsabschnitts unterzogen wird, um den Öffnungsabschnitt zu öffnen oder zu schließen.

7. System nach Anspruch 1,
wobei der Fingerabdruckdetektionsabschnitt einen Unterschied einer elektrostatischen Kapazität misst, die einer Struktur des Fingers entspricht, um dadurch den Fingerabdruck zu detektieren.

8. System nach Anspruch 1,
wobei sich das Einführungsloch von einer Vorderfläche (11b) des Vorrichtungsgehäuses öffnet.

9. System nach Anspruch 1,
wobei sich das Einführungsloch von einem Rückende (11b) des Vorrichtungsgehäuses öffnet.

## Revendications

1. Système, comprenant:
une carte de circuit imprimé (IC) amovible; et
un dispositif de souris (5), comprenant:
une enceinte de dispositif (11) comprenant une partie d'activation (12, 13, 14) apte à activer un équipement hôte (1), et connectée à l'équipement hôte,
dans lequel l'enceinte de dispositif comprend:
une partie de chargement (15) apte à recevoir la carte IC (40) à l'intérieur de l'enceinte de dispositif;
une partie de connexion (18) prévue à une extrémité de la partie de chargement afin de connecter électriquement la carte IC au dispositif de souris; et
un trou d'insertion (16) à travers lequel la carte IC est insérée dans la partie de chargement,
**caractérisé en ce que**:
une surface de la carte IC est pourvue d'une partie de détection d'empreintes digitales (51);
le dispositif de souris comprend en outre une partie d'ouverture (17) à l'intérieur de l'enceinte de dispositif dans la partie de chargement qui expose la partie de détection d'empreintes digitales de la carte IC à l'extérieur de l'enceinte de dispositif; et
dans lequel la partie de détection d'empreintes digitales est exposée à l'extérieur de l'enceinte de dispositif à travers la partie d'ouverture en chargeant la carte IC par rapport à la partie de chargement.

2. Système selon la revendication 1, dans lequel une surface latérale (17a) qui constitue la partie d'ouverture est constituée par une courbe saillante de telle sorte qu'il devienne facile de positionner l'extrémité du doigt d'un utilisateur lorsqu'une prise d'empreintes digitales est réalisée.

3. Système selon la revendication 1, dans lequel un élément d'obturateur (20) qui ouvre ou ferme la partie d'ouverture est prévu à la partie d'ouverture.

4. Système selon la revendication 3, dans lequel l'élément d'obturateur est constitué d'un corps en forme de plaque conductrice.

5. Système selon la revendication 3, comprenant un élément de maintien (26) qui est disposé à l'intérieur de l'enceinte de dispositif, un bouton de relâchement de maintien (33) saillant en direction de l'extérieur de l'enceinte de dispositif étant prévu à une partie d'extrémité de celui-ci, une partie saillante (27) pour supporter l'élément d'obturateur étant formée à l'autre extrémité de celui-ci, l'élément de maintien étant supporté de façon rotative,
dans lequel l'élément d'obturateur est poussé dans une direction de surface avant de l'enceinte de dispositif par un élément de poussée (24) qui est disposé au côté de surface arrière de l'enceinte de dispositif; et
dans lequel l'élément de maintien maintient l'élément d'obturateur par la partie saillante lorsque l'élément d'obturateur est déplacé en direction du côté de surface arrière de l'enceinte de dispositif afin d'ouvrir ainsi la partie d'ouverture, et le bouton de relâchement de maintien est pressé dans l'état dans lequel l'élément d'obturateur est maintenu de telle sorte que l'état de maintien par rapport à l'élément d'obturateur soit relâché afin de fermer automatiquement la partie d'ouverture.

6. Système selon la revendication 3,
dans lequel l'élément d'obturateur est engagé avec un élément de poussée (83) à la surface latérale de celui-ci; et
dans lequel l'élément de poussée pousse l'élément d'obturateur dans une direction d'entraînement comme conséquence du fait que l'obturateur est amené à subir une opération d'entraînement dans une direction d'ouverture ou dans une direction de fermeture de la partie d'ouverture pour ouvrir ou pour fermer la partie d'ouverture.

7. Système selon la revendication 1, dans lequel la partie de détection d'empreintes digitales mesure une différence de capacité électrostatique qui correspond à un motif de doigt afin de détecter ainsi une empreinte digitale.

8. Système selon la revendication 1, dans lequel le trou d'insertion s'ouvre à partir d'une surface avant (11b) de l'enceinte de dispositif.

9. Système selon la revendication 1, dans lequel le trou d'insertion s'ouvre à partir d'une extrémité arrière (11c) de l'enceinte de dispositif.
